# EUROPÄISCHE PATENTANMELDUNG

(11) **EP 2 492 639 A1**
(43) Veröffentlichungstag der Anmeldung: **29.08.2012**
(21) Anmeldenummer: 11155319.4
(22) Anmeldetag: 22.02.2011
(51) Int. Cl.: G01C 21/34, G06F 17/30, G06Q 10/00, H04W 4/02, H04L 29/08

(54) **Erzeugung und personalisierte Abfrage von geotagged Sprach-Blogs**

(71) Anmelder: Palio AG, 22765 Hamburg (DE)
(72) Erfinder: Fuchs, Heiko, 22765 Hamburg (DE)
(74) Vertreter: Eisenführ, Speiser & Partner

(57) **Zusammenfassung**

Die Erfindung betrifft ein Verfahren bei dem nutzer-generierte Sprachdateien mittels Mobilgerät (400) erzeugt und publiziert werden und von anderen Nutzern, die mit den publizierenden Nutzern in Kontakt stehen, beispielsweise über eine graphische Benutzerschnittstelle (410) abgefragt werden. Derartige Verfahren werden auch als Sprach- oder Voice-Blogging bezeichnet. Um die insbesondere bei Mobilgeräten nur begrenzt bereitstehenden Kapazitäten zur Datenübertragung zu schonen, beschreibt die Anmeldung ein Verfahren bei dem nur relevante Sprachdateipakete versendet werden. Dies geschieht indem die Relevanz der Sprachdateipakete nutzerindividuell dadurch bestimmt wird, dass inhaltsbeschreibende charakterisierende Merkmale in Form von geographischen Positionsangaben mit den Geotags der Sprachdateien verglichen werden. Zusätzlich werden noch sogenannten "kontaktgewichte" bestimmt und ausgewertet. Bei einem "Kontaktgewicht" handelt es sich um ein Maß welches die soziale Distanz zwischen Kontakt, d.h. dem generierenden Nutzer, und dem abfragenden Nutzer beschreibt. Diesbezuglich kann insbesondere die Anzahl der Kommunikationsbeziehungen zwischen zwei Nutzern berücksichtigt werden. Des weiteren können die Sprachdateien auch zur Routenplanung verwendet werden, indem eine Abweichung vom kürzesten Streckenverlauf individuell eingeplant wird, wenn geo-tagged Sprachdateien von "engen" Kontakten sich in der Nähe der Route befinden.

## Beschreibung

Die Erfindung betrifft ein Verfahren zum Empfangen, Verwalten und Versenden einer Mehrzahl von kontaktbezogenen Sprachdateien einer Mehrzahl von Kontakten eines Nutzers auf einem Servercomputer mit den Verfahrensschritten: (i) Empfangen eines kontaktbezogenen Sprachdateipakets auf dem Servercomputer von einem ersten Nutzermobilgerät, das zur Aufnahme von Sprache und zur Codierung der Sprache in eine Sprachdatei ausgebildet ist, wobei das Sprachdateipaket codierte akustische Sprachsignale enthält; (ii) Speichern des kontaktbezogenen Sprachdateipakets auf dem Servercomputer; (iii) Empfangen eines Anforderungssignals, welches ein anforderndes charakterisierendes Merkmal enthält, auf dem Servercomputer von einem zweiten Nutzermobilgerät, (iv) nach Erhalt des Anforderungssignals Versenden des kontaktbezogenen Sprachdateipakets von dem Servercomputer an das zweite Nutzermobilgerät zur Speicherung in einem Speicher des zweiten Nutzermobilgeräts; wobei das Sprachdateipaket zumindest eine Sprachdatei und ein den Inhalt der Sprachdatei beschreibenden charakterisierenden Datencode umfasst.

Grundsätzlich besteht in der heutigen Kommunikationstechnik eine Vielzahl von Möglichkeiten, um Informationen zwischen zwei oder mehr Personen auf größere Distanzen mit technischen Übertragungsmitteln auszutauschen. Dabei kann grundsätzlich unterschieden werden zwischen der privaten Kommunikation, die ausschließlich zwischen zwei Personen abläuft und für andere Personen nicht einsehbar ist und üblicherweise solcherart verläuft, dass von den jeweiligen beiden Personen genutzte Computer oder Mobilgerät, worunter in diesem Zusammenhang insbesondere drahtgebundene oder drahtlose Telefongeräte, insbesondere solche mit erweitertem Funktionsumfang wie einer Bilddarstellung und einer menügesteuerten Benutzerführung wie sogenannte Smartphones verstanden werden sollen, die Informationen versendet werden. In die Versendung sind dabei in der Regel Vermittlungsstellen eingebunden, so dass eine direkte Kommunikation zwischen zwei Mobilgeräten nicht stattfindet, sondern durch Einbindung von zentralen, miteinander kommunizierenden Vermittlungsstellen erfolgt. Andererseits haben sich eine Vielzahl von Plattformen gebildet, in welche eine Vielzahl von Benutzern persönliche Informationen und Nachrichten einspeisen können, die dann einem größeren Benutzerkreis zugänglich gemacht sind. Diese, überwiegend Internet-basierten Kommunikationsplattformen beruhen auf der Informationseinspeisung auf eine zentral und gemeinsam benutzte Plattform durch jeden einzelnen Benutzer von seinem persönlich genutzten Computer bzw. Mobilgerät.

Der überwiegende Anteil dieser technischen Lösungen zum Informationsaustausch, zur Informationseingabe, Verwaltung, Übermittlung und Ausgabe, ist textbasiert. D.h., die Informationen der Benutzer werden in Textform, typischerweise über eine Tastatur, eingegeben, als solche codiert und übermittelt und auch den Empfängern als solche angezeigt. Textbasierter Informationsaustausch hat den Vorteil, dass aufgrund der guten datentechnischen Codierung und Komprimierungsfähigkeit sehr geringe Datenvolumina übermittelt und gespeichert werden müssen und es aufgrund dieser Möglichkeiten in der Regel einen geeigneten Informationsaustausch darstellt, der keine Echtzeit-Teilnahme beider oder aller beteiligten Personen erfordert, sondern auch eine zeitversetzte Kommunikation ermöglicht, in welcher eine Nachricht formuliert und für den Adressaten hinterlassen wird, der diese zu einem späteren Zeitpunkt liest, dann darauf antwortet und seine Antwort wiederum beim ursprünglichen Absender der ersten Nachricht hinterlässt, damit dieser diese später lesen kann. Solcher textbasierter Informationsaustausch zwischen zwei oder mehr Personen hat sich beispielsweise als E-Mail, SMS, Chat, Twitter, Internetforum oder dgl. etabliert und findet heutzutage breite Anwendung, wobei die vorgenannten jeweiligen Umsetzungen des textbasierten Informationsaustausches auf teilweise unterschiedlichen technischen Lösungen beruhen.

Ein grundsätzlicher Nachteil an dem textbasierten Informationsaustausch ist die Notwendigkeit, die Information in einen Text zu fassen, wodurch auf Seiten des Absenders zusätzlicher Aufwand entsteht, und die Notwendigkeit, die Information als Text zu lesen, wodurch auf Seiten des Adressaten die Notwendigkeit entsteht, die Information durch Lesen aufzunehmen. In vielen Anwendungsfällen ist es hingegen wünschenswert, dass Informationen in sprachlicher Form ausgetauscht werden können, um einerseits die Geschwindigkeit der Informationseingabe durch den Absender zu erhöhen, andererseits die Möglichkeit beim Adressaten zu erzielen, die Information akustisch aufzunehmen.

Neben dem klassischen Telefonat, bei dem Absender und Adressat in Echtzeit miteinander kommunizieren, haben sich unterschiedliche technische Möglichkeiten etabliert, um Sprachinformationen auch für eine zeitversetzte Informationsweitergabe zu nutzen. So ist es einerseits bekannt, textbasierte Information in Sprachinformation umzusetzen, indem eine entsprechende Sprachumsetzung erfolgt, um textbasierte Information akustisch auszugeben. Dies ist beispielsweise als so genannte Sprach-SMS bekannt. Darüber hinaus ist es ebenfalls bekannt, mittels Spracherkennungsroutinen sprachlich eingegebene Informationen in textbasierte Informationen umzucodieren, um auf diese Weise aus dem gesprochenen Wort einen Text zu erzeugen. All diese Vorgehensweisen beruhen auf dem Grundsatz, in einem Eingabegerät des Absenders eine Umcodierung in textbasierte Information vorzunehmen oder auf einem Ausgabegerät des Adressaten eine Umcodierung aus textbasierter Information in Sprachinformation vorzunehmen, um auf diesem Weg den Austausch textbasierter Informationen beizubehalten. Nachteilig an diesem Verfahren ist es, dass sowohl auf Absender- wie auch auf Adressatenseite erhebliche und zeitverzögernde Codierungs- und Decodierungsmaßnahmen erfordert und darüber hinaus aufgrund der Individualität der menschlichen Sprache in der Regel Fehlinterpretationen in der Codierung aus Sprache in Text und Fehlbetonungen in der Codierung aus Text in Sprache unvermeidbar macht. Diese Art und Weise der sprachlichen Informationsein- und -ausgabe wird für den Austausch von Informationen daher von vielen Nutzern als technisch unzulänglich und schlecht handhabbar empfunden. Es ist weiterhin bekannt, sprachbasierte Informationen zwischen zwei Benutzern auszutauschen, indem eine Sprachnachricht unmittelbar vom Absender für den Empfänger platziert und hinterlassen wird. Diese, als Anrufbeantworter-, Mailbox- oder Voice-Mail-Funktion bekannte Informationsweise beruht auf der unmittelbaren Versendung von Sprachnachrichten, d.h. diese Sprachnachrichten werden zum Zwecke der Versendung nicht in eine textbasierte Form codiert und anschließend wiederum decodiert und macht sich die Speicherung dieser Sprachnachrichten auf einer Vermittlungseinrichtung zunutze. Nachteilig an dieser Art des Informationsaustausches ist es, dass die Kommunikation in der Regel nur ausgebildet ist, um zwischen genau zwei Personen stattzufinden und dass die technischen Möglichkeiten, die solcherart ausgetauschten Informationen dem Adressaten zugänglich zu machen, begrenzt sind. So ist es einerseits in der Regel nur möglich, die solcherart platzierten Sprachnachrichten in chronologischer Weise abzuhören, wahlweise einzelne dieser Sprachnachrichten zu löschen oder zu speichern oder erneut anzuhören. Des Weiteren ermöglicht diese Art der Kommunikation es dem Absender nicht, die Sprachnachricht zu einem Zeitpunkt zu erstellen, zu dem keine Übermittlung an die Vermittlungseinrichtung möglich ist, d.h. die Sprachnachricht kann weder vor ihrer Versendung nochmals kontrolliert werden noch kann sie in einem Offline-Modus erstellt werden. Ebensowenig besteht die Möglichkeit, dass der Adressat die Sprachnachricht in einem Offline-Modus abhört.

Grundsätzlich besteht in technischer Hinsicht ein zentraler Unterschied zwischen der Verwendung von Sprachnachrichten und der Verwendung von Textnachrichten darin, dass Textnachrichten ein beträchtlich geringeres Datenvolumen umfassen als Sprachnachrichten. So lässt sich ein geschriebener Satz auf ein um Größenordnung niedrigeres Datenvolumen komprimieren und in dieser Form versenden als derselbe gesprochene Satz als Sprachnachricht. Dies hat aus technischer Hinsicht zur Folge, dass einerseits technisch spezifische Lösungen für die Versendung von Sprachnachrichten gegenüber Textnachrichten wünschenswert sind, um die übertragenen Datenvolumina an diese Umstände anzupassen. Darüber hinaus ergeben sich aber auch auf den benutzten Sende- und Empfangsgeräten hieraus resultierende technische Problemstellungen, die darin liegen, dass Sprachnachrichten nicht in beliebigem Umfang gespeichert werden können, da hierdurch bei Nutzung über einen längeren Nutzungszeitraum das zur Verfügung stehende Speichervolumen durch das hiervon eingenommene Speichervolumen in einer belastenden Weise ausgenutzt und möglicherweise überlastet würde.

Bei der sprachbasierten Informationsübermittlung ergibt sich ein weiteres technisches Problem, weiches aus dem Nutzungsverhaiten herrührt, wenn ein Absender oder Adressat eine Vielzahl von Sprachnachrichten auf seinem Gerät versendet oder empfängt und darauf zugreifen möchte. Während es nämlich grundsätzlich möglich ist, eine Mehrzahl von textbasierten Informationen parallel darzustellen, beispielsweise indem eine Listung aller textbasierten Informationspakete auf einem Bildschirm dargestellt wird, gegebenenfalls nur unter Verwendung der ersten zehn Wörter jedes textbasierten Informationspaketes, ist es derzeit nicht möglich, eine solche Parallelausgabe sprachbasierter Informationen in einer für den Menschen verständlichen Weise zu präsentieren. Stattdessen ist es stets erforderlich, sprachbasierte Informationen in einer zeitlich aufeinander folgenden Weise darzustellen, da eine Paralleldarstellung zwar technisch möglich, für den Menschen aber unverständlich wäre. Dieser besondere Umstand, der aus der unterschiedlichen Informationsaufnahme durch das menschliche Auge und das menschliche Ohr resultiert, erfordert eine grundsätzlich andere Art der Verwaltung von Sprachnachrichten, wenn angestrebt wird, Mittel zur effizienten Auswahl bestimmter Sprachnachrichten bereitzustellen.

Schließlich besteht eine weitere spezifische Problematik in der Nutzung von sprachbasierten Informationen und deren Weitergabe darin, dass diese Art von Informationsaustausch in technischer Weise für die Kommunikation zwischen genau zwei Personen umsetzbar ist, es allerdings an geeigneten Informationsübermittlungswegen und Informationsverwaltungsmitteln fehlt, um auch sprachbasierte Informationen von einer Person an eine Mehrzahl von Personen zu versenden und diesen zugänglich zu machen oder sprachbasierte Informationen, die von mehreren Quellen stammen, einer einzelnen Person zugänglich zu machen.

Der Erfindung liegt die Aufgabe zugrunde, ein Verfahren bereitzustellen, welches die oben genannten Probleme überwindet und ein Verfahren zur sprachbasierten Informationsübermittlung und -verwaltung bereitzustellen, mit dem eine effiziente Erstellung, Versendung, Verwaltung und Ausgabe von Sprachnachrichten ermöglicht wird.

Diese Aufgabe wird erfindungsgemäß gelöst indem das Verfahren ferner den Verfahrensschritt des Ermittelns eines Kommunikationsverhaltens zwischen dem Nutzer und dem Kontakt des Nutzers mittels Zuordnen eines Kontaktgewichtes zu dem Kontakt des Nutzers umfasst, wobei das Kontaktgewicht einem Grad eines Kommunikationsverhaltens zwischen dem Nutzer und dem Kontakt entspricht; wobei der Grad eines Kommunikationsverhaltens einem berechenbaren Rangwert entspricht; wobei der Servercomputer das inhaltsbeschreibende charakterisierende Merkmal auswertet und mit dem anfordernden charakterisierenden Merkmal vergleicht, und wobei das kontaktbezogene Sprachdateienpaket an das zweite Nutzermobilgerät in Abhängigkeit des Ergebnisses der Auswertung, des Vergleichs des inhaltsbeschreibenden mit dem anfordernden charakterisierenden Merkmal und des Kontaktgewichtes versendet wird.

Mit dem erfindungsgemäßen Verfahren wird eine effiziente Möglichkeit der Versendung und Verwaltung von Sprachnachrichten bereitgestellt, welche einerseits die spezifischen Umstände, welche sich in technischer Hinsicht aufgrund des erhöhten Datenvolumens von Sprachnachrichten ergeben, andererseits die spezifischen Umstände, die sich aufgrund der unterschiedlichen technischen Möglichkeiten zur Darstellung, Auswahl und Verwaltung von Sprachnachrichten ergeben, in vorteilhafter Weise berücksichtigt. Grundlegender Kern des erfindungsgemäßen Verfahrens ist dabei, dass jede Sprachnachricht in Form einer Sprachdatei gespeichert und in ein Sprachdateipaket eingeschlossen wird, welches weitere Informationen enthält, darunter insbesondere zumindest ein inhaltsbeschreibendes charakterisierendes Merkmal. Anhand dieses inhaltsbeschreibenden, charakterisierenden Merkmals wird dann ein Vergleich dieses Merkmals mit einem anfordernden charakterisierenden Merkmal getroffen, um auf diese Weise eine Sprachnachricht einer gezielten Auswahl und Verwaltung zugänglich zu machen. Dabei ist zu verstehen, dass sowohl das inhaltsbeschreibende als auch das anfordernde charakterisierende Merkmal nach der erfindungsgemäßen Weise nicht mit den intrinsisch bedingten Abfrageumständen gleich und zu verwechseln sind, also insbesondere nicht als inhaltsbeschreibendes oder anforderndes charakterisierendes Merkmal die Eigenschaft zu verstehen ist, dass sich die Sprachnachricht an den Adressaten wendet oder durch den Adressaten abgerufen wird, also nicht der Adressat selbst als charakterisierendes Merkmal zur Durchführung des Vergleichs alleinig dienen kann. Vielmehr ist erfindungsgemäß vorgesehen, eine inhaltsbezogene charakterisierende Merkmalsangabe dem Sprachdateienpaket hinzuzufügen. Unter einer solchen inhaltsbezogenen Angabe kann beispielsweise das Erstellungsdatum verstanden werden, alternativ oder zusätzlich aber auch eine geographische Angabe über eine geographische Position oder Region, auf die sich die Sprachnachricht bezieht, eine Kategorie, unter welche der Inhalt der Sprachnachricht fällt, ein Thema, zu welchem sich der Inhalt der Sprachnachricht verhält, der Absender, welcher die Sprachnachricht erstellt hat und dgl. Mit dem erfindungsgemäßen Verfahren wird es somit in vorteilhafter Weise möglich, sprachbasierte Nachrichten zwischen mehreren Nutzern auszutauschen und diese dabei in solcher Weise zu verwalten, dass lediglich bestimmte, den spezifischen Bedürfnissen entsprechende Sprachnachrichten versendet und empfangen werden, welche durch eine entsprechende Auswahl anhand eines charakterisierenden anfordernden Merkmals und dessen Vergleich mit einem dem Sprachdateipaket zugeordneten inhaltsbeschreibenden Merkmal versendet und empfangen werden. Mit dem erfindungsgemäßen Verfahren wird daher einerseits das zu versendende Datenvolumen in signifikanter Weise reduziert, da nicht mehr automatisch alle an einen Adressaten gerichtete Sprachdateien versendet werden, ohne dass der Adressat hierfür den Sendevorgang gezielt abbrechen müsste und andererseits die Speicherkapazität auf einem Empfangsgerät, welche für die Sprachnachrichten erforderlich ist, begrenzt, ohne dass hierzu manuelle oder selektiv automatische Löschungsvorgänge erforderlich wären.

Durch Ermitteln eines Kommunikationsverhaltens ermöglicht das erfindungsgemäße Verfahren ferner eine Berücksichtigung der Bedeutung eines Kontaktes des Nutzers. Der Sprachnachricht eines besonders engen Kontaktes soll dabei beispielsweise eine besonders hohe Bedeutung zukommen, der Sprachnachricht eines lediglich flüchtigen Kontaktes soll demgegenüber beispielsweise eine besonders geringe Bedeutung beikommen. Dabei ist klar dass die Einordnung "enger Kontakt" oder "flüchtiger Kontakt" von Nutzer zu Nutzer variieren kann, da manche Nutzer beispielsweise eine besonders hohe Zahl oder einen besonders hohen Anteil an engen Kontakten haben, wohingegen andere Nutzer nur eine geringe Zahl oder einen geringen Anteil an engen Kontakten haben. (Dies gilt entsprechend für flüchtige Kontakte.) Der Grad eines Kommunikationsverhaltens soll einem berechenbaren Rangwert entsprechen. Demzufolge lässt sich dem Grad eines Kommunikationsverhaltens zwischen zwei Nutzern beispielsweise eine erste Zahl zuordnen, dem Grad eines Kommunikationsverhaltens zwischen zwei weiteren Nutzern lässt sich eine zweite Zahl zuordnen. Durch Vergleich von erster und zweiter Zahl (beispielsweise "kleiner als" bzw. "größer als") ist eine Anordnung beider Zahlen in einer Rangfolge möglich. Die erhaltene Rangfolge von erster und zweiter Zahl entspricht einer Rangfolge der jeweiligen Grade von Kommunikationsverhalten zweier Nutzerpaare. Wird beispielsweise dem Grad eines Kommunikationsverhaltens zwischen Nutzer A und Nutzer B die Zahl 10 zugeordnet, während dem Grad eines Kommunikationsverhaltens zwischen Nutzer A und Nutzer C die Zahl 100 zugeordnet wurde, lässt sich dies beispielsweise dahingehend deuten, dass der Kontakt von A zu C enger ist als der Kontakt von A zu B. Auf diese Weise ist die Erstellung einer Rangfolge von Kontakten des Nutzers A beispielsweise von "sehr eng" zu "lediglich flüchtig" möglich.

Das erfindungsgemäße Verfahren ermöglicht es darüber hinaus, Sprachdateien in solcher Weise zu verwalten und zu versenden, dass einerseits eine von einem Benutzer erstellte Sprachnachricht von mehreren Benutzern empfangen und gehört werden kann, indem sich das erfindungsgemäße Verfahren von der reinen Absender-Adressat-Kopplung löst und stattdessen eine Verwaltung und eine Versendung von Sprachnachrichten nach einem inhaltsbezogenen charakterisierenden Merkmal ermöglicht. Darüber hinaus können auch mehrere Sprachnachrichten, die von unterschiedlichen Personen erstellt worden sind, sich jedoch inhaltlich auf ein übereinstimmendes charakterisierendes Merkmal beziehen, von einer einzigen Person komfortabel zugegriffen werden, indem eine technische Verwaltungs- und Versendemöglichkeit bereitgestellt wird, die eine entsprechende Zuordnung solcher mehrerer Sprachnachrichten zu einem inhaltlichen Thema unabhängig von der Frage, wer die Sprachnachricht erstellt, versendet hat und wer diese Sprachnachricht empfangen möchte und sie folglich abfragt, bereitgestellt wird.

Ein weiterer Aspekt der Erfindung ist ein Verfahren zum Aufnehmen, Verwalten und Ausgeben einer Mehrzahl von Sprachdateien auf einem Nutzermobilgerät, mit den Verfahrensschritten: (a) Ermitteln eines Kommunikationsverhaltens zwischen einem Nutzer und einer Mehrzahl von Kontakten des Nutzers mittels Zuordnen eines Kontaktgewichtes zu zumindest einem der Mehrzahl von Kontakten des Nutzers, wobei das Kontaktgewicht einem Grad eines Kommunikationsverhaltens zwischen dem Nutzer und dem Kontakt entspricht, wobei der Grad eines Kommunikationsverhaltens einem berechenbaren Rangwert entspricht; (b) Erstellen von individuellen Sprachdateipaketen mittels: Aufnehmen einer individuellen Sprachdatei mittels einer Aufnahmeschnittstelle auf einem ersten Nutzermobilgerät durch einen Kontakt des Nutzers; Zuordnen eines inhaltsbezogenen charakterisierenden Merkmals zu der Sprachdatei, Erstellen eines individuellen Sprachdateipakets aus der individuellen Sprachdatei, dem inhaltsbezogenen charakterisierenden Merkmal und einer Kennung des Kontakts auf dem ersten Nutzermobilgerät, und Versenden des individuellen Sprachdateipakets von dem ersten Nutzermobilgerät an einen Servercomputer; und (c) Ausgeben von Sprachdateipaketen mittels: Senden eines anfordernden charakterisierenden Merkmals von einem zweiten Nutzermobilgerät an den Servercomputer; Empfangen einer Mehrzahl von Sprachdateipaketen auf dem zweiten Nutzermobilgerät von dem Servercomputer, wobei jedes Sprachdateipaket eine Sprachdatei und ein dem anfordernden charakterisierenden Merkmal zugeordnetes inhaltsbeschreibendes charakterisierendes Merkmal enthält; Speichern der Mehrzahl von Sprachdateipaketen in einem Speicher des zweiten Nutzermobilgeräts; Einspeisen eines ausgabebezogenen charakterisierenden Merkmals in das zweite Nutzermobilgerät; Auswerten des inhaltsbezogenen charakterisierenden Merkmals auf dem zweiten Nutzermobilgerät und Erstellen einer Reihenfolge der Mehrzahl von Sprachdateipaketen anhand eines Vergleichs des inhaltsbezogenen charakterisierenden Merkmals mit dem ausgabebezogenen charakterisierenden Merkmal auf dem zweiten Nutzermobilgerät, wobei das Erstellen einer Reihenfolge in Abhängigkeit des Kontaktgewichtes erfolgt; zeitlich aufeinanderfolgendes Wiedergeben der Sprachdateien der Mehrzahl von Sprachdateipaketen in der erstellten Reihenfolge über eine akustische Ausgabevorrichtung des zweiten Nutzermobilgeräts.

Während mit dem zuvor erläuterten erfindungsgemäßen Verfahren eine spezifische Art der Auswahl von zu versendenden Sprachdateien auf einem Servercomputer beschrieben wird und hierdurch einerseits die Problematik der zu transferierenden Datenvolumina, andererseits die Problematik der zu speichernden Datenvolumina auf den Empfangsgeräten in spezifischer Weise adressiert wird, wird mit diesem Aspekt der Erfindung ein Verfahren bereitgestellt, welches sich insbesondere mit der Erstellung und Ausgabe von Sprachdateien auf einem Mobilgerät befasst und hierbei in eben gleicher Weise die Problematik der Begrenzung des Speichervolumens und des empfangenen Datenvolumens adressiert und mittels eines Abgleichs inhaltsbezogener charakterisierender Merkmale der Sprachdateipakete mit einem ausgabebezogenen charakterisierenden Merkmal löst. Darüber hinaus wird mit diesem Aspekt der Erfindung ein Verfahren bereitgestellt, welches eine Möglichkeit beinhaltet, unter einer Vielzahl von auf einem Mobilgerät gespeicherten Sprachnachrichten auf bestimmte Sprachnachrichten zwecks deren Ausgabe zuzugreifen, indem eine entsprechende Sortierungsfolge bereitgestellt wird. Dabei kann dieser Zugriff einerseits durch eine Benutzereingabe über eine Benutzerschnittstelle erfolgen, andererseits auch über unmittelbar aus in dem Mobilgerät generierten charakterisierenden Merkmalen, die ausgabebezogen sind, erzeugt werden. So kann beispielsweise aus einer in das Mobilgerät integrierten Uhr ein Zeitpunkt als ausgabebezogenes Merkmal festgelegt sein, zu dem dann gegebenenfalls durch weitere charakterisierende Merkmale ausgewählte Sprachnachrichten ausgegeben werden. Des Weiteren kann aus einer in das Mobilgerät integrierten Positionsbestimmungseinheit eine geographische Position als ausgabebezogenes Merkmal herangezogen werden, um bei Erreichen dieser geographischen Position oder einer bestimmten Mindestannäherung hieran einen Ausgabevorgang einer bestimmten Sprachnachricht oder bestimmter Sprachnachrichten auszuführen.

Die solcherart auf dem Mobilgerät erstellten Sprachdateienpakete können dann an einen Servercomputer versendet werden. Hierbei wird für den Versand und Empfang vorzugsweise eine drahtlose Übertragung über ein Mobilfunknetz, wie beispielsweise UMTS, EDGE oder WLAN eingesetzt.

Dabei besteht die Besonderheit des Verfahrens darin, dass Sprachdateipakete, welche an eine solche geographische Position inhaltlich geknüpft sind, von anderen Mobilgeräten aus zuvor erstellt und versendet worden sein müssen, und dass des Weiteren das diese Sprachnachricht ausgebende Mobilgerät diese Sprachnachricht abgerufen und gespeichert haben muss, um die Ausgabe durchzuführen. Eine weitere Besonderheit liegt darin, dass es mittels des erfindungsgemäßen Verfahrens möglich ist, eine solche ortsbezogene Sprachdatei zwischen genau zwei Mobilgeräten auszutauschen, so dass individuelle, ortsbezogene Nachrichten ausgetauscht werden können. Erfindungsgemäß ist hierbei, ebenso wie bei dem zuvor erläuterten Verfahren, insbesondere vorgesehen, dass der Vergleich zwischen inhaltsbezogenen charakterisierenden Merkmalen und anfordernden bzw. ausgabebezogenen charakterisierenden Merkmalen auf Grundlage einer Kombination mehrerer zu vergleichender Merkmale erfolgt. So ist es beispielsweise möglich, eine Auswahl nach den Kriterien Absender, Erstellungszeitpunkt und geographischer Position zu wählen, um nur solche Sprachnachrichten abzuhören, die von einem bestimmten Absender erstellt worden sind, eine bestimmte Aktualität haben und sich auf einen bestimmten Ort oder Umkreis um einen Ort beziehen.

Ebenso ermöglicht das erfindungsgemäße Verfahren hier durch Ermitteln eines Kommunikationsverhaltens ferner eine Berücksichtigung der Bedeutung eines Kontaktes des Nutzers. Dabei soll ebenso der Sprachnachricht eines besonders engen Kontaktes beispielsweise eine besonders hohe Bedeutung zukommen, der Sprachnachricht eines lediglich flüchtigen Kontaktes soll demgegenüber beispielsweise eine besonders geringe Bedeutung beikommen. Wie oben bereits erläutert ist klar dass die Einordnung "enger Kontakt" oder "flüchtiger Kontakt" von Nutzer zu Nutzer variieren kann, da manche Nutzer beispielsweise eine besonders hohe Zahl oder einen besonders hohen Anteil an engen Kontakten haben, wohingegen andere Nutzer nur eine geringe Zahl oder einen geringen Anteil an engen Kontakten haben. (Dies gilt entsprechend für flüchtige Kontakte.) Auf oben beschriebene Weise ist die Erstellung einer Rangfolge von Kontakten eines Nutzers beispielsweise von "sehr eng" zu "lediglich flüchtig" möglich.

Gemäß einer ersten bevorzugten Ausführungsform ist vorgesehen, dass der Rangwert berechnet wird, indem aus folgenden Faktoren: einer Häufigkeit eines Sendens und/oder Empfangens von Sprachdateipaketen zwischen dem Nutzer und dem Kontakt, wobei die Häufigkeit einem absoluten Zahlenwert oder einem Zahlenwert pro Zeiteinheit entspricht, einem dem Kontakt zugeordneten persönlichen Rangfaktor, welcher durch den Nutzer individuell bestimmt werden kann, einem einer Kategorie des Kontaktes zugeordneten Rangfaktor, wobei die Kategorie insbesondere eine von Verwandte, Freunde, Kollegen und Kontakte mit gleichen Interessen ist, zumindest einer, vorzugsweise zwei oder alle drei in einer vorbestimmten Gewichtung in eine Berechnung einfließen. Wie zuvor bereits erläutert ermöglicht das erfindungsgemäße Verfahren durch Ermitteln eines Kommunikationsverhaltens eine Berücksichtigung der Bedeutung eines Kontaktes des Nutzers. Der Grad eines Kommunikationsverhaltens soll dabei einem berechenbaren Rangwert entsprechen. Auf diese Weise ermöglicht das erfindungsgemäße Verfahren die Erstellung einer Rangfolge von Kontakten eines Nutzers beispielsweise von "sehr eng" zu "lediglich flüchtig". Der Rangwert lässt sich insbesondere berechnen aus der Zahl der gesendeten und/oder empfangenen Sprachdateipakete. Dabei ist zu verstehen, dass eine solche Zahl absolut oder pro Zeiteinheit messbar ist. So kann diese Zahl der Anzahl an insgesamt jemals versendeten Sprachdateipaketen von Nutzer A an Nutzer B entsprechen. Ebenso ist es möglich, dass lediglich ein vorbestimmter Zeitraum, etwa die vorangegangene Woche, die letzten zwei Tage, die vorangegangenen Stunden etc. maßgeblich für die Berechnung des Rangwertes ist. Dabei ist zu verstehen, dass der Rangwert nicht nur in regelmäßigen Abständen neu berechnet wird und sich schon deswegen ändern kann. Vielmehr kann der Rangwert auch von bestimmten Rahmenbedingungen, beispielsweise eine bestimmte Uhrzeit, eine bestimmte geographische Position, ein bestimmter Wochentag etc., abhängen. So kann der Rangwert einer Kontaktkategorie (wie z.B. Vereinsmitglieder, Verwandte, Menschen mit ähnlichen Interessen) zu für diese Kategorie bzw. Gruppe besonders bedeutsamen Zeiten höher sein. Beispielsweise kann der Rangwert eines Arbeitskollegen des Nutzers an Werktagen höher sein als am Wochenende. Ebenso ist zu verstehen, dass den Arbeitskollegen eines Nutzers ein höherer Rangwert als beispielsweise seinen Verwandten dritten Grades zugeordnet wird, wenn sich ein Nutzer an oder in der Nähe der geographischen Position seines Arbeitsplatzes aufhält.

Dabei ist es weiterhin bevorzugt, wenn als anforderndes und/oder als ausgabebezogenes charakterisierendes Merkmal eine geographische Positionsangabe über eine Benutzerschnittstelle des zweiten Nutzermobilgeräts eingegeben wird oder mittels einer geographischen Positionsbestimmungsvorrichtung des zweiten Nutzermobilgeräts ermittelt wird, das inhaltliche charakterisierende Merkmal von Sprachdateipaketen, die auf dem Servercomputer gespeichert bzw. von diesem empfangen werden, eine geographische Positionsangabe darstellt; die Sprachdateipakete an das zweite Nutzermobilgerät übertragen bzw. auf dem zweite Nutzermobilgerät akustisch wiedergegeben werden, wenn eine vordefinierte Distanz zwischen der geographischen Positionsangabe des anfordernden bzw. ausgabebezogenen charakterisierenden Merkmals und der geographischen Positionsangabe des inhaltlich charakterisierenden Merkmals des jeweiligen Sprachdateipakets unterschritten wird. Mit dieser Fortbildungsform ist es möglich, zwischen zwei Mobilgeräten Sprachnachrichten auszutauschen und diese in Abhängigkeit der Annäherung des adressierten Mobilgeräts an eine geographische Position auf diesem auszugeben. So können beispielsweise individuelle Nachrichten unter der Bedingung weitergegeben werden, dass der Adressat den nachrichtsbezogenen Ort mit seinem Mobilgerät erreicht, beispielsweise um eine Hotelempfehlung, eine Verkehrswarnung, eine an die eigene Wohnstätte geknüpfte Sprachnachricht oder dgl. zu versenden und zeitversetzt beim Empfänger ortsabhängig ausgeben zu lassen. Dabei kann vorgesehen sein, dass das versendende und die Sprachnachricht erstellende Mobilgerät die hierzu erforderliche Positionsangabe entweder aus einem lokalen Positionssensor innerhalb des Mobilgeräts selbst erstellt und folglich den Erstellungsort als inhaltsbezogenes charakterisierendes Merkmal hinzufügt oder dass diese inhaltsbezogene charakterisierende Positionsangabe durch eine Benutzereingabe dem Sprachdateipaket hinzugefügt wird, so dass auch Sprachnachrichten erstellt werden können, die sich auf Orte beziehen, an denen sich das die Sprachnachricht erstellende Mobilgerät zum Zeitpunkt der Erstellung nicht befindet.

Es ist weiterhin bevorzugt, dass das Verfahren den Verfahrensschritt des Auswählens einer Route zwischen geographischen Positionsangaben von zumindest einer Teilmenge der Sprachdateipakete umfasst. Das Auswählen berücksichtigt insbesondere der Route zugeordnete Streckengewichte und/oder die der Teilmenge der Sprachdateipakete zugeordneten Kontaktgewichte. Die Streckengewichte werden für geordnete Paare von geographischen Positionsangaben bestimmt. Ein Streckengewicht entspricht einem Rangwert, der berechnet wird, indem vorgespeicherte Berechnungswerte in einer vorbestimmten Gewichtung in eine Berechnung einfließen. Die vorgespeicherten Berechnungswerte sind spezifisch für eine bestimmte Reiseart und umfassen insbesondere: eine Streckenlänge zwischen dem geordneten Paar von geographischen Positionsangaben; eine Reisedauer zwischen dem geordneten Paar von geographischen Positionsangaben; Reisekosten, um die Strecke zwischen dem geordneten Paar von geographischen Positionsangaben zurückzulegen. Unter einer Route soll hier ein geplanter Reiseweg bzw. eine vorgeschriebene Wegstrecke verstanden werden. Insbesondere bezeichnet eine Route einen genauen Weg zwischen mehreren geographischen Positionen und dient damit der "Leitweglenkung", "Streckenführung" oder "Verkehrsführung". Erfindungsgemäß bezeichnet eine Route eine Abfolge von Wegabschnitten zwischen geographischen Positionen, die jeweils einem oder mehreren Sprachdateipaketen zugeordnet sind. Folgt ein Nutzer einer Route, so bereist er nacheinander eine Folge geographischer Positionsangaben. Befindet sich der Nutzer innerhalb einer vorbestimmten Distanz zu einer geographischen Position, so kann das Mobilgerät des Nutzers veranlasst werden, die zu der geographischen Position gehörige Sprachnachricht wiederzugeben. Die so ermöglichte sequenzielle Wiedergabe der Sprachdateien, welche denjenigen geographischen Positionsangaben zugeordnet sind, die sich entlang der Route befinden, soll auch als "Wiedergabe der Route" bezeichnet werden. Dabei ist zu verstehen, dass sich ein Nutzer die jeweiligen Sprachdateien auch vor Antritt seiner Reise bzw. seines Rundgangs wiedergeben lassen kann, um zu entscheiden, ob er die ausgewählte Route zurücklegen will oder nicht, was ebenfalls unter die Bedeutung des Begriffs "Wiedergabe der Route" fallen kann. Ein besonderer Vorteil der beschriebenen Ausführungsform liegt darin, dass eine Route individuell für einen Nutzer erstellt werden kann, wobei sich die Route entlang geographischer Positionen erstreckt, zu denen durch Kontakte des Nutzers Sprachdateipakete erzeugt worden sind. Hierin liegt insbesondere eine Verbesserung gegenüber herkömmlichen Routenplanern, die in der Regel im Voraus erzeugte vollständige Routen anbieten, die nicht individualisierbar sind. So liefern herkömmliche Routenplaner oder Leitsysteme für unterschiedliche Nutzer stets die gleiche Route. Die Einbeziehung beispielsweise von Empfehlungen enger Kontakte eines Nutzers ist bei herkömmlichen Routenplanern nicht vorgesehen. Mit der beschriebenen bevorzugten Ausführungsform wird demnach ein Verfahren bereitgestellt, dass in der Lage ist, zwei unterschiedlichen Nutzern, die sich zu gleichen Zeit am selben Ort befinden und eine Route mit den gleichen charakteristischen Merkmalen anfordern, unterschiedliche Routen anzubieten. Das erfindungsgemäße Verfahren berücksichtigt hierbei die Kontakte und das Kommunikationsverhalten jedes Nutzers, um insbesondere diejenigen geographischen Positionen in den Streckenverlauf einzubeziehen, zu denen Sprachdateipakete von engen Kontakten des Nutzers vorliegen. Dabei ist zu verstehen, dass beispielsweise bei Sprachdateipaketen von engen Kontakten des Nutzers eine Abweichung vom kürzesten Weg eher akzeptiert wird, als bei Sprachdateipaketen von lediglich flüchtigen Kontakten.

Gemäß einer weiteren bevorzugten Ausführungsform ist vorgesehen, dass ein Umgebungsbereich des Nutzers über eine graphische Wiedergabeeinheit des zweiten Nutzermobilgeräts ausgegeben wird. Die Größe des ausgegebenen Umgebungsbereichs ist bevorzugt über eine Benutzerschnittstelle skalierbar. Alle Sprachdateipakete werden bevorzugt an das zweite Nutzermobilgerät übertragen bzw. auf dem zweiten Nutzermobilgerät akustisch wiedergegeben, deren geographische Positionsangabe des inhaltlich charakterisierenden Merkmals des jeweiligen Sprachdateipakets innerhalb des solcherart skaliert ausgegebenen Umgebungsbereichs liegt. Dabei werden vorzugsweise die Sprachdateipakete gemäß der ausgewählten Route in eine Reihenfolge sortiert, und in dieser Reihenfolge übertragen bzw. wiedergegeben werden. Diese spezifische Ausführungsform adressiert im speziellen die Problematik der relevanzsortierten Ausgabe von geographisch bezogenen Sprachnachrichten. Grundsätzlich ist es für einen Benutzer beispielsweise in Abhängigkeit der von ihm nachgesuchten Information, teilweise aber auch in Abhängigkeit des von ihm benutzten Verkehrsmittels in sehr unterschiedlicher Weise interessant, positionsbezogene Nachrichten aus seinem näheren oder weiteren Umkreis zu erhalten. Die Bereitstellung von Sprachnachrichten stellt hier aufgrund der zuvor erläuterten schlechten Paralleldarstellbarkeit eine besondere Problematik dar. Erfindungsgemäß wird hierbei der Weg beschritten, die Verfügbarkeit positionsbezogener Sprachnachrichten auf einer graphischen Ausgabeeinheit darzustellen und hierbei dem Benutzer durch Auswahl eines Fensters bei dieser Darstellung es zu ermöglichen, den für ihn relevanten geographischen Bereich, aus dem Sprachnachrichten wiedergegeben werden sollen, auszuwählen. Nachdem diese graphische Auswahl getroffen wurde, können die hierzu relevanten Sprachnachrichten in den Speicher des benutzten Mobilgeräts geladen werden bzw. aus diesem Speicher ausgegeben werden.

Noch weiter ist es bevorzugt, dass die ausgewählte Route an das zweite Nutzermobilgerät gesendet bzw. von diesem empfangen und gespeichert wird, wobei die ausgewählte Route eine erste Route ist. Bevorzugt wird die Wiedergabe der ersten Route auf dem zweiten Nutzermobilgerät begonnen; während dieser Wiedergabe wird eine weitere ausgewählte Route auf das zweite Nutzermobilgerät gesendet bzw. von diesem empfangen und gespeichert, wobei die weitere ausgewählte Route eine zweite Route ist. Bevorzugt wird ferner die Versendung bzw. der Empfang und die Speicherung der ersten Route abgebrochen und bereits gespeicherte Anteile der ersten Route gelöscht, falls die Wiedergabe der ersten Route durch eine Benutzereingabe in eine Benutzerschnittstelle vor dem Ende der ersten Route unterbrochen wird. Wie zuvor erläutert, besteht eine grundsätzliche Problematik bei Sprachnachrichten darin, dass eine Parallelwiedergabe zwecks gezielter Auswahl durch den Benutzer nicht möglich bzw. unpraktikabel ist. Diese Problematik betrifft einerseits die Wiedergabe, wirkt sich jedoch unmittelbar auch auf die Versendung von Sprachnachrichten aus, wenn hierbei Sendezeiten, Datenvolumen und dgl. berücksichtigt werden sollten. Gemäß der bevorzugten Ausführungsform ist vorgesehen, dass in einem Fall, in dem aufeinander folgend mehrere Sprachdateipakete aufgrund einer erfindungsgemäßen Auswahl eines anfordernden charakterisierenden Merkmals übersandt werden, zunächst das erste Sprachdateipaket einer ersten Route (bzw. alle Sprachdateipakete einer ersten Route) übermittelt wird, dieses dann unmittelbar nach Versendung, gegebenenfalls auch bereits während seiner Versendung auf dem Mobilgerät wiedergegeben wird und nach dieser begonnenen Wiedergabe erst das zweite Sprachdateipaket der ersten Route (bzw. alle Sprachdateipakete einer zweiten Route) zeitversetzt zum ersten versendet wird. Die Versendung dieses zweiten und gegebenenfalls weiterer Sprachdateipakete einer bestimmten Route wird dann gestoppt, sollte der Benutzer die Wiedergabe der ersten Sprachnachricht vor ihrem regulären Ende vorzeitig, insbesondere eine vorbestimmte Zeitspanne oder länger vor ihrem Ende beenden. Diese technische Umsetzung der sequenziellen Datenübertragung mit wahlweisem Abbruch macht sich zunutze, dass der Benutzer in diesem Fall bereits anhand der ersten übertragenen Sprachnachricht abschätzen kann, ob die angeforderten Sprachdateipakete bzw. die angeforderte Route seinen Vorstellungen und Wünschen entsprechen, er also die anfordernden charakterisierenden Merkmale zutreffend gewählt hat. Ein vorzeitiges Abbrechen der ersten Route bei ihrer Wiedergabe wird hierbei vom System unmittelbar als Indiz für eine fehlende Relevanz der angeforderten Sprachdateipakete gewertet und folglich auf eine Übermittlung weiterer Sprachdateipakete unmittelbar verzichtet und die Löschung von Anteilen bereits geladener Sprachdateipakete aus dem Speicher des Mobilgeräts veranlasst.

Gemäß einer weiteren bevorzugten Ausführungsform wird einem Sprachdateipaket weiterhin ein Rangwert zugeordnet, der berechnet wird, indem aus folgenden Faktoren: der seit dem Erstellungszeitpunkt der Sprachnachricht vergangenen Zeitspanne, der Anzahl der Speichervorgänge, mit denen das Sprachdateipaket auf weiteren Nutzermobilgeräten nach Abrufen des Sprachdateipakets gespeichert wurde, der Anzahl der Weiterleitungsvorgänge, mit denen das Sprachdateienpaket durch ein Nutzermobilgerät an ein anderes Nutzermobilgerät gesendet wurde, ein dem Absender des Sprachdateipakets zugeordneter persönlicher Rangfaktor, welcher sich aus der Höhe der Rangwerte der bisher von diesem Absender erstellten Sprachdateienpakete errechnet, zumindest zwei, vorzugsweise drei oder alle vier in einer vorbestimmten Gewichtung in eine Berechnung einfließen, und eine Reihenfolge oder Auswahl von Sprachnachrichten, die an ein Nutzermobilgerät versendet oder von diesem Nutzermobilgerät abgespielt werden, anhand des solcherart berechneten Rangwertes erfolgt. Durch diese Fortbildung wird es möglich, unter einer Vielzahl von Sprachnachrichten nur bestimmte Sprachnachrichten zur Übertragung oder Ausgabe bereitzustellen, so dass eine technisch sinnvolle Ausnutzung der zur Datenübertragung bereitstehenden Kapazitäten und der zur Ausgabe der Sprachnachrichten verfügbaren Mittel erreicht wird. Dabei ist zu verstehen, dass der Rangwert eines Sprachdateienpakets in regelmäßigen Abständen ermittelt und zugeordnet werden kann, oder dass dieser Rangwert erst im Zeitpunkt der Anforderung oder des Abspielens von Sprachnachrichten berechnet werden kann.

Noch weiter ist es bevorzugt, dass aus einer Mehrzahl von Sprachdateienpaketen, deren inhaltsbezogene(s) Merkmal(e) mit dem/den anfordernden bzw. ausgabebezogenen Merkmal(en) übereinstimmen, eine vorbestimmte, insbesondere über eine Eingabe in das Nutzermobilgerät vorbestimmbare Anzahl von Sprachdateipaketen versendet bzw. ausgegeben werden und diese Anzahl von Sprachdateienpaketen zwei Anteilen umfasst, wobei der erste Anteil aus Sprachdateipaketen besteht, deren Erstellungsdatum nicht mehr als eine vorbestimmte Zeitspanne, insbesondere über eine Eingabe in das Nutzermobilgerät vorbestimmbare Zeitspanne vor dem Zeitpunkt der Anforderung bzw. Wiedergabe liegt und der zweite Anteil aus Sprachdateipaketen besteht, die die höchsten Rangwerte haben. Mit dieser Fortbildung wird eine Nutzung der zur Verfügung stehenden Übertragungs- und Ausgabemittel bzw. Kapazitäten erreicht, die einerseits eine ausreichende Aktualität der Sprachnachrichten, andererseits eine ausreichende Qualität der Sprachnachrichten sicherstellt. Grundsätzlich ist zu verstehen, dass die rangwertbezogene Sortierung und Bereitstellung alternativ oder in Kombination mit einer geographischen Sortierung angewendet werden kann.

Noch weiter ist es bevorzugt, dass mehrere Sprachdateipakete zu einer Programmzeit als Datenblock über eine bestehende drahtlose Funkverbindungen an das Nutzermobilgerät gesendet bzw. von diesem empfangen werden, auf diesem gespeichert werden und zu einem späteren Zeitpunkt bei nicht bestehender drahtloser Funkverbindung auf dem Nutzermobilgerät ausgegeben werden. Das erfindungsgemäße Verfahren ermöglicht es grundsätzlich, Sprachnachrichten in Echtzeit durch ein Mobilgerät von einem Servercomputer anzufordern und auf dem Mobilgerät wiederzugeben. Aufgrund der Speicherung der Sprachdateipakete auf dem Mobilgerät ist jedoch ein besonderer Vorteil insbesondere auch die zeitversetzte Wiedergabe von Sprachnachrichten nach ihrem Versenden. So eröffnet das System auch grundsätzlich die vorteilhafte Möglichkeit, Sprachnachrichten, die in wiederkehrender Weise aufgrund festgelegter Suchkriterien vom Mobilgerät angefordert werden, stets zu festgelegten Programmzeiten an das Mobilgerät zu versenden, um diese dann zeitversetzt später auszugeben. Auf diese Weise ist es beispielsweise möglich, für solche wiederkehrende Sprachnachrichten Programmzeiten innerhalb eines Datenübertragungsnetzwerkes zu nutzen, zu welchen erfahrungsgemäß wenig Datenverkehr herrscht, um hierdurch eine zeitlich optimierte Ausnutzung der Datenübertragungskapazitäten des Netzwerks zu erzielen. Dabei kann insbesondere auch eine durch Benutzereingabe veranlasste Vorabspeicherung von Sprachnachrichten erfolgen, beispielsweise um vor einem Auslandsaufenthalt relevante Sprachnachrichten online zu laden und dann später offline zur Verfügung zu haben. Diese Ausgestaltung kann insbesondere mit der zuvor erläuterten Umgebungsbereich-gestützten Ladung und Wiedergabe von Sprachnachrichten kombiniert werden, beispielsweise um alle relevanten Sprachnachrichten, die für einen bestimmten Zielort oder Zielumgebungsbereich zur Verfügung stehen, vorab zu laden und diese später offline im Zielgebiet zur Verfügung zu haben.

Weiterhin ist es bevorzugt, dass ein Sprachdateipaket eine Benutzereingabe abfragt oder eine Datenverbindung zu einem Computer herstellt, der eine Benutzereingabe abfragt und dabei vorzugsweise vor Eingabe der Benutzereingabe in das Nutzermobilgerät oder vor deren Versendung das Nutzermobilgerät mit dem Servercomputer oder einem anderen Computer Daten austauscht, die einen Zahlungsvorgang bewirken. Grundsätzlich besteht in bestimmten Anwendungen die Problematik, neben der Übersendung einer Sprachnachricht eine Abfrage einer Information in Abhängigkeit dieser Sprachnachricht durchzuführen. Diese Problematik wird erfindungsgemäß dadurch gelöst, dass nach Wiedergabe einer Sprachnachricht eine entsprechende Information vom Benutzer abgefragt wird und diese dann entsprechend versendet wird. Dabei ist es, einerseits um eine kommerzielle Nutzung solcher Informationsabfragen durchführen zu können, andererseits aber auch um die Seriosität von auf solche Weise gegebenen Auskünften und eingeholten Informationen sicherzustellen, in vielen Anwendungen wünschenswert, den eine solche Information abgebenden Benutzer daran zu hindern, diese Informationen in sinnloser Weise abzugeben. Dies wird erfindungsgemäß erreicht, indem die Informationsabgabe für den Benutzer zwingend mit einer Zahlung verknüpft ist. Auf diese Weise können beispielsweise seriöse Informationseinholungen erzielt werden, indem Benutzer, die lediglich die Verfälschung einer solchen Informationseinholung und Befragung zum Ziel haben, von der einfachen oder mehrfachen Abgabe von Fehlinformationen abgehalten werden, da dies für den Benutzer mit erheblichen Kosten verbunden wäre.

Noch weiter ist es bevorzugt, dass in Antwort auf eine Eingabe des Nutzers eine Kommunikationsverbindung hergestellt wird zu einem Kontakt, dessen Sprachdateipaket an eine vorbestimmte Position der erstellten Reihenfolge sortiert wurde, und/oder dessen Sprachdateipaket zuletzt übertragen bzw. akustisch wiedergegeben wurde. Grundsätzlich besteht bei manchen sprachbasierten Informationen die Problematik, dass sich beim Nutzer Rückfragen ergeben. Dies kann etwa daran liegen, dass dem Nutzer die Informationen der Sprachnachricht nicht präzise genug erscheinen. Ebenso ist denkbar, dass ein Nutzer Wert auf hohe Aktualität legt und den Verfasser eines Sprachdateipakets von vor einer Woche darum bitten möchte, ihm den neuesten Stand mitzuteilen. Hierbei hat der Nutzer nun einmal die Möglichkeit, den Verfasser des fraglichen Sprachdateipakets direkt anzurufen. Eine weitere Möglichkeit besteht darin, dem Verfasser des Sprachdateipakets wiederum selbst ein Sprachdateipaket mit einer konkreten Frage oder Bitte zu senden. Dies ist insbesondere dann von Vorteil, wenn der Verfasser des Sprachdateipakets nicht zu den direkten Kontakten des Nutzers gehört, sondern beispielsweise eine sprachbasierte Information veröffentlicht hat, etwa zu seinen Erfahrungen mit einem Hotel, mit einem Theater oder mit einem Museum etc. Hat ein Nutzer Informationsbedarf bezüglich des veröffentlichten Sprachdateipakets, kann er den ursprünglichen Verfasser direkt kontaktieren.

Ein weiterer Aspekt der Erfindung betrifft einen Servercomputer, welcher ausgestaltet ist, die erfindungsgemäßen Verfahrensschritte (i) bis (v) auszuführen.

Weiterhin kann die Erfindung umgesetzt werden in einem Nutzermobilgerät, welches ausgestaltet ist, die erfindungsgemäßen Verfahrensschritte (b) oder (c) durchzuführen. Dabei kann es insbesondere vorgesehen sein, ein solches Nutzermobilgerät fortzubilden, indem es vorzugsweise folgendes umfasst: eine Dateneingabeschnittstelle zum Empfang akustischer Eingaben, eine Datenausgabeschnittstelle zur Ausgabe akustischer Sprachdaten, eine Positionsbestimmungsvorrichtung zur Bestimmung der geographischen Position des Nutzermobilgeräts, eine Dateneingabeschnittstelle zur Eingabe von Textdaten und/oder eine Datenausgabeschnittstelle zur Ausgabe graphischer Daten.

Das erfindungsgemäße Verfahren bzw. zur Ausführung des erfindungsgemäßen Verfahrens ausgestalteten Mobilgeräte erlaubt es folglich insbesondere, eine Sprachdatei aufzunehmen, diese mit einem Empfänger, insbesondere aus einer Kontaktdatentabelle zu versehen, an das Mobilgerät dieses Empfängers zu versenden und hierbei wiederum dem Empfänger der Sprachnachricht zu ermöglichen, die Sprachnachricht auf seinem Mobilgerät abzuhören und hierauf mit einer weiteren Sprachnachricht an den ursprünglichen Absender zu antworten. Dabei wird die Sprachnachricht vorzugsweise über einen Servercomputer versendet und kann hierdurch auch an eine Gruppe von Personen versendet werden und folglich Konferenzfunktionen erfüllen. Besonders bevorzugt ist dabei, dass die Sprachmitteilungen mit einem charakterisierenden Merkmal in Form einer geografischen Positionsangabe versehen werden können und folglich auf einer graphischen Ausgabe einer geografischen Umgebung die Verfügbarkeit von Sprachnachrichten zu bestimmten geografischen Positionen entsprechend durch ein Symbol angezeigt werden kann, um diese abrufbar zu machen. Dabei ist es weiterhin bevorzugt, dass die Sprachdatei auch auf einem Mobilgerät in Abhängigkeit von dessen geografischer Position in Bezug auf die geographische Positionsangabe, die der Sprachnachricht zugeordnet ist, wiedergegeben werden kann und hierbei insbesondere eine vom Benutzer wählbare Distanz einstellbar ist, ab dessen Unterschreitung die Wiedergabe auf dem Mobilgerät erfolgt. Die Unterschreitung dieser eingestellten Distanz kann einerseits die Übertragung der Sprachnachricht von einem Computerserver auf das Mobilgerät auslösen, andererseits oder zusätzlich auch dessen Ausgabe auf dem Mobilgerät.

Eine bevorzugte Ausführungsform wird anhand der beiliegenden Figuren beschrieben. Es zeigen:
- Fig. 1: eine schematische Darstellung des erfindungsgemäßen Verfahrensablaufs,
- Fig.2: eine schematische Darstellung eines erfindungsgemäßen Verfahrensablaufs am Beispiel des Durchlaufens einer bestimmten geographischen Position,
- Fig. 3: eine beispielhafte Darstellung einer Benutzerschnittstelle für das erfindungsgemäße Verfahren,
- Fig. 4: eine beispielhafte Darstellung einer ein Sprachdateipaket repräsentierenden Benutzerschnittstelle für das erfindungsgemäße Verfahren, und
- Fig. 5: eine schematische Darstellung einer Benutzerschnittstelle in der Anwendung einer sortierten Wiedergabe von Sprachnachrichten in einer darstellungsbezogenen geographischen Positionierung.
- Fig. 6 bis 9: weitere beispielhafte Visualisierungen der Benutzerschnittstelle für das erfindungsgemäße Verfahren.

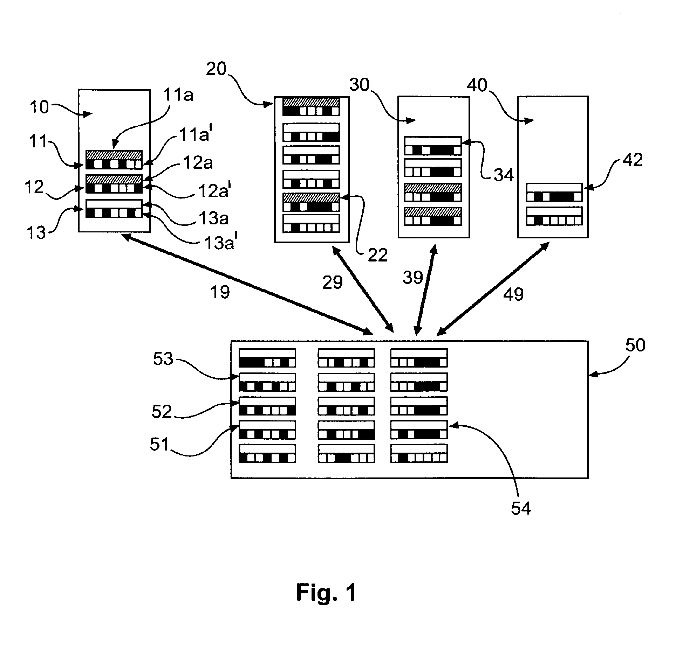

Bezug nehmend zunächst auf Fig. 1 sind vier Mobilgeräte 10, 20, 30, 40 dargestellt. Jedes der vier Mobilgeräte 10 ― 40 kommuniziert mit einem Servercomputer 50, um mit diesem Sprachdateipakete auszutauschen.

Auf dem Mobilgerät 10 sind drei Sprachdateipakete 11, 12, 13 gespeichert. Von diesen drei Sprachdateipaketen sind zwei Sprachdateipakete 11, 12 auf dem Mobilgerät 10 erstellt worden und entlang einer Übertragungsstrecke 19 an den Servercomputer 50 übertragen worden, um dort für andere Benutzer bereitgestellt zu werden. Das dritte Sprachdateipaket 13 wurde über die Datenübertragungsstrecke 19 vom Servercomputer 50 an das Mobilgerät 10 gesendet und von diesem empfangen.

Jedes Sprachdateipaket 11, 12, 13 besteht aus einer Sprachdatei 11a, 12a, 13a und einem Datenblock 11a', 12a', 13a', der mehrere charakterisierende Merkmale aufweist, was in Fig. 1 durch eine entsprechende Unterteilung schematisch dargestellt ist. Es ist zu verstehen, dass die mehreren charakterisierenden Merkmale grundsätzlich durch binäre Daten dargestellt werden, hierdurch aber durchaus differenzierte Merkmalsbeschreibungen enthalten können. So kann ein charakterisierendes Merkmal beispielsweise in einer Kategoriesortierung bestehen, die eine Sprachdatei in unterschiedliche Kategorien wie beispielsweise "Hotelbeschreibung", "Sport-Event", "Verkehrsnachricht", "private Nachricht", und dgl. zuordnen kann. Ein weiteres charakterisierendes Merkmal kann in einer geographischen Positionsangabe bestehen, die durch einen Längen- und Breitengrad dargestellt wird.

In gleicher Weise sind auch auf den Mobilgeräten 20, 30, 40 Sprachdateipakete gespeichert, die einerseits von dem Mobilgerät aus erstellt und versendet wurden über entsprechende Datenübertragungsstrecken 29, 39, 49 oder über diese Datenübertragungsstrecken vom Servercomputer 50 empfangen worden sind.

Wie aus der beispielhaften Darstellung zu erkennen ist, wurde ein Sprachdateipaket 22 mit bestimmten inhaltsbezogenen charakterisierenden Merkmalen erstellt und an den Servercomputer 50 versendet und dort als Sprachdateipaket 54 gespeichert. Dieses Sprachdateipaket 54 wurde durch einen Anforderungsbefehl der Mobilgeräte 30 und 40, welches anfordernde charakterisierende Merkmale umfasst, die den inhaltsbezogenen charakterisierenden Merkmalen dieses Sprachdateipakets 54 entsprechen, angefordert und entsprechend mittels der Datenübertragungsstrecken 39, 49 an die Mobilgeräte 30, 40 übertragen und dort entsprechend als jeweilige Sprachdateipakete 34, 42 gespeichert. Auf diesen Mobilgeräten 30, 40 kann demzufolge, wenn weiterhin ein Ausgabevorgang aufgrund insoweit übereinstimmender ausgabebezogener charakterisierender Merkmale durchgeführt wird, die entsprechende Sprachdatei des Sprachdateipakets 34, 42 ausgegeben und vom entsprechenden Benutzer gehört werden.

Dabei ist zu verstehen, dass nicht notwendigerweise zu diesem Zweck das anfordernde charakterisierende Merkmal, welches die Datenübertragung vom Servercomputer auf das Mobilgerät veranlasst, vollkommen mit dem ausgabebezogenen charakterisierenden Merkmal, welches die Ausgabe der gespeicherten Sprachdatei auf dem Mobilgerät veranlasst, übereinstimmen muss. Stattdessen ist es lediglich erforderlich, dass das anfordernde charakterisierende Merkmal oder die entsprechende Merkmalskombination der Mobilgeräte 30 bzw. 40 mit den inhaltsbezogenen charakterisierenden Merkmalen der entsprechenden Sprachdateipakete soweit übereinstimmt, dass hierdurch ein Übertragungsvorgang ausgelöst wird, darauf folgend jedoch gegebenenfalls andere ausgabebezogene charakterisierende Merkmale wiederum mit den inhaltsbezogenen Merkmalen des Sprachdateipakets soweit übereinstimmen, dass ein Ausgabevorgang ausgelöst wird.

In bestimmten Einstellungen kann dabei auch vorgesehen sein, dass eine zu einer Datenübertragung eines Sprachdateipakets führende Übereinstimmung zwischen anfordernden und inhaltsbezogenen charakterisierenden Merkmalen zu einer unmittelbaren Ausgabe auf dem Mobilgerät führt, nachdem das Sprachdateipaket übertragen wurde, so dass in diesem Fall eine weitere Filterung und Bestätigung mittels eines ausgabebezogenen charakterisierenden Merkmals entfällt.

Ferner ist zu verstehen, dass die Nutzer der Mobilgeräte 10, 20, 30, 40 möglicherweise zueinander in unterschiedlichen Kontaktverhältnissen stehen: Beispielsweise sei Nutzer A von Mobilgerät 10 verwandt mit Nutzer B von Mobilgerät 20, Arbeitskollege von Nutzer C von Mobilgerät 30 und gemeinsamer Fussballfan mit Nutzer D von Mobilgerät 40. Nutzer A und Nutzer B haben insbesondere zu Terminen wie Geburtstagen und Feiertagen (etwa Weihnachten und Neujahr) Kontakt, tauschen im Übrigen aber nur selten Sprachnachrichten aus. Nutzer A und Nutzer C kommunizieren vor allem werktags zwischen acht Uhr morgens und fünf Uhr nachmittags, mit einzelnen Spitzen vor regelmäßigen Arbeitsbesprechungen. Nutzer A und Nutzer D kommunizieren samstagnachmittags besonders intensiv (sie tauschen etwa alle fünf Minuten eine Sprachnachricht aus), haben den Rest der Woche aber praktisch keinen Kontakt. Empfängt das Mobilgerät von Nutzer A an einem gewöhnlichen Montagmorgen um zehn Uhr eine Sprachnachricht von allen Nutzern B, C und D, so erhält beispielsweise die Sprachnachricht von Nutzer C (dem Arbeitskollegen des A) einen besonders hohen Rangwert. Handelt es sich andererseits um einen Montag, den 24. Dezember, so wird beispielsweise Nutzer B (dem Verwandten des A) einen besonders hohen Rangwert erhalten. Ebenso ist zu verstehen, dass der Rangwert sich insbesondere nach der geographischen Position von Nutzer A richten kann. Ist diese Position in oder nahe bei einem Fussballstadion, würde beispielsweise dem Sprachdateipaket von Nutzer D (dem Fussballfan) ein besonders hoher Rangwert zugeordnet. Ebenso kann sich der Rangwert nach der Zahl der ausgetauschten Sprachdateipakete in einer bestimmten Zeiteinheit richten. Haben A und B an einem Samstagnachmittag beispielsweise 30 Sprachdateipakete ausgetauscht, so würde B an diesem Tag ein höherer Rangwert als beispielsweise Nutzer D zugewiesen.

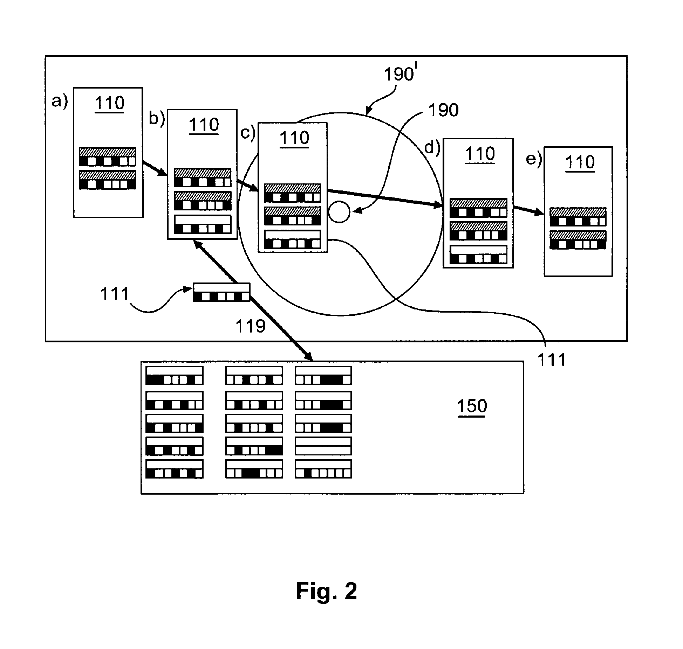

Fig. 2 zeigt den schematischen Verlauf eines einzigen Mobilgeräts 110, welches sich durch einen geographischen Raum 100 bewegt und hierbei einen Point of Interest 190 durcheilt. Das Mobilgerät 110 bewegt sich zunächst von einer Position a) in eine Position b), in der es in einer vorbestimmten Distanz 190' um den Point of Interest 190 sich befindet. Mittels eines in das Mobilgerät 110 integrierten GPS-Sensors wird diese Position über eine Datenübertragungsstrecke 119 an einen Servercomputer 150 gesendet. Zugleich ist das Mobilgerät 110 solcherart programmiert, dass mit der Versendung eines solchen anfordernden charakterisierenden Merkmals in Form der Positionsangabe ein durch weitere anfordernde, charakterisierende Merkmale gebildetes Profil versendet wird, welches in diesem Fall aus der Kombination "Hotelempfehlung" UND > "3-Sterne" ODER "Verkehrsnachricht" besteht.

Dieses Anforderungsprofil wird durch ein Sprachdateipaket 111 erfüllt, welches in dem Moment, in dem das Mobilgerät 110 in den Distanzkreis 190' eintritt, folglich über eine Datenübertragungsstrecke 119 von dem Servercomputer 150 auf das Mobilgerät 110 übertragen wird. Dort wird das Sprachdateipaket gespeichert und während des weiteren Eintretens c) in Richtung des Point of Interest 190 unmittelbar abgespielt, um dem Benutzer des Mobilgeräts die Information wiederzugeben. Diese Information wurde zuvor von einem anderen Benutzer des erfindungsgemäßen Verfahrens eingegeben, typischerweise zu einem Zeitpunkt, wo er den Point of Interest mit seinem Mobilgerät aufsucht und hierzu eine beschreibende Sprachnachricht eingegeben und mit den entsprechenden inhaltsbezogenen charakterisierenden Merkmalen versehen und an den Servercomputer 150 gesendet hat.

Nach Durchlaufen der Distanz 190' und Verlassen dieses Bereichs um den Point of Interest 190 erfasst das Mobilgerät 110 an der Position d), dass die ausgabebezogenen charakterisierenden Merkmale, welche für die laufende Ausgabe definiert sind, von dem Sprachdateipaket 111 nicht weiter erfüllt sind und löscht dieses Sprachdateipaket folglich aus dem Speicher des Mobilgeräts 110. Das Mobilgerät 110 setzt seine Bewegung dann weiter fort e) in einem Speicherzustand, der demjenigen vor Eintritt in den Bereich um den Point of Interest 190 entspricht.

Es ist zu verstehen, dass sich aus einer Abfolge verschiedener Points-of-Interest eine Route bestimmen lässt. Ebenso kann einem Nutzer anhand einer Mehrzahl gespeicherter Sprachdateipakete, denen jeweils eine geographische Ortsangabe oder Position zugeordnet ist, eine Route vorgeschlagen werden. Beispielsweise interessiere sich ein Nutzer A aus der Stadt X für eine Route entlang der besten Schuhgeschäfte der Stadt Y. Aus den charakterisierenden Merkmalen "Schuhgeschäft" und "Stadt Y" lässt sich dann bereits eine Vorauswahl unter den potentiell zur Verfügung stehenden Sprachdateipaketen treffen. Hat der Nutzer einige enge Kontakte in Y, so erhalten Sprachdateipakete dieser Kontakte mit dem Merkmal "Schuhgeschäft" einen höheren Rangwert, als Sprachdateipakete anderer Nutzer. Dabei ist zu verstehen, dass der Nutzer weitere oder andere anfordernde Merkmale vorgeben kann. Aus einer Teilmenge aller zur Verfügung stehenden Sprachdateipakete wird sodann unter Berücksichtigung der zugeordneten geographischen Positionen eine Route berechnet und dem Nutzer vorgeschlagen. Nutzer A kann sich entscheiden, die Route zu beginnen, indem er die erste geographische Position der vorgeschlagenen Route aufsucht. Ebenso kann Nutzer A sich entscheiden, zunächst mehrere Sprachdateipakete wiedergeben zu lassen, bevor er sich für oder gegen das Antreten der vorgeschlagenen Route entscheidet. So ist im obigen Beispiel denkbar, dass ein Kontakt B von A zwar ein bestimmtes Schuhgeschäft sehr positiv bewertet hat, dass B jedoch einschränkend in seiner Sprachnachricht erklärt, dass das fragliche Geschäft nur für Freizeitschuhe, nicht aber für Designerware geeignet sei. Will A aber gerade Designerschuhe kaufen, wird er die vorgeschlagene Route abbrechen oder gar nicht erst antreten und eine neue Route wählen. Gegebenenfalls gibt A über die Benutzerschnittstelle seines Mobilgeräts weitere charakterisierende Merkmale (etwa "Designerschuhe") an. Ferner ist denkbar, dass ein Nutzer sich je nach Fortbewegungsart für oder gegen eine Route bzw. Teile dieser Route entscheidet. So könnte ein Nutzer bei starkem Regen davon absehen, ein Einkaufszentrum zugunsten eines sich zwei Straßen weiter befindlichen Geschäfts zu verlassen, falls er zu Fuß unterwegs ist.

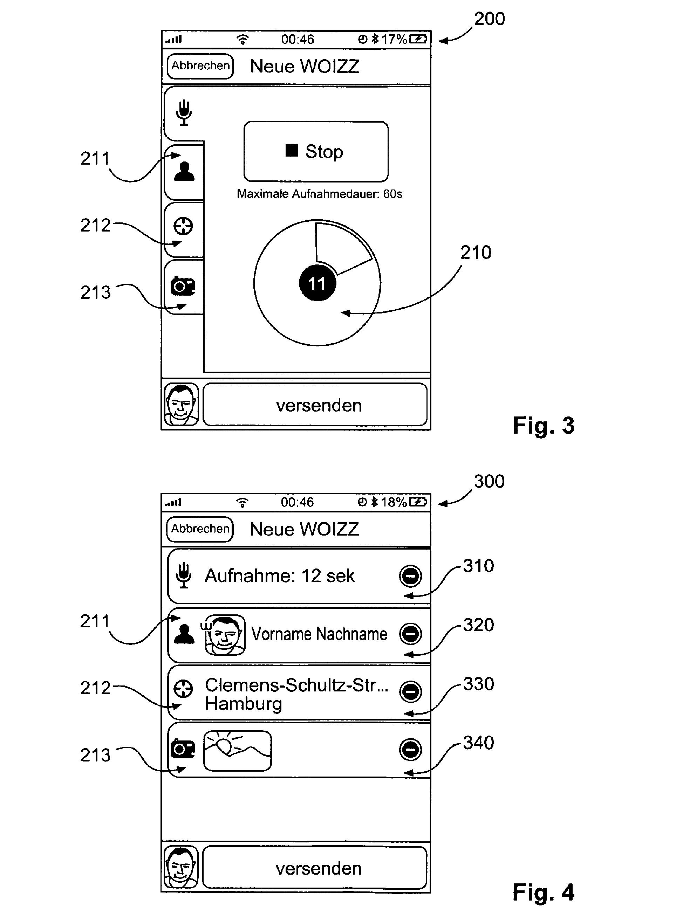

Fig. 3 zeigt eine Benutzerschnittstelle zur Aufnahme einer Sprachnachricht auf einem Mobilgerät 200. Dargestellt ist der Vorgang der Aufnahme einer Sprachnachricht. Hierbei wird durch ein graphisches, als sich füllender Kreis ausgebildetes Kreisdiagramm 210 die bereits verstrichene und noch verbleibende Zeit für eine Sprachnachricht dem Benutzer signalisiert, um eine effiziente Ausnutzung der limitierten Dauer von 60 Sekunden einer Sprachnachricht für das erfindungsgemäße Verfahren zu ermöglichen. Nach Ablauf dieser Zeit oder Beendigung der Spracheingabe vor Ablauf der Zeit wird die Sprachnachricht erneut dem Benutzer vorgespielt, damit dieser deren Inhalt kontrollieren kann. Hiernach kann der Benutzer mittels der Benutzerschnittstelle die Sprachnachricht mit verschiedenen inhaltsbezogenen charakterisierenden Merkmalen 211-213 versehen, beispielsweise indem er die Sprachnachricht einer Kategorie zuordnet, beispielsweise die von einem integral im Mobilgerät enthaltenen GPS-Sensor zum Zeitpunkt der Aufnahme detektierte geographische Position 212 oder ein Bild 213. Die Sprachnachricht wird dann weiterhin mit einer Absendercodierung versehen und der Absender hat die Möglichkeit, die Sprachnachricht an eine einzelne Person aus seiner Kontaktliste zu versenden oder eine Gruppe von Personen aus seiner Kontaktliste auszuwählen oder diese Sprachnachricht öffentlich zugänglich zu machen, um sie jedem Teilnehmer am Sprachnachrichtensystem gemäß der Erfindung zugänglich zu machen.

Fig. 4 zeigt eine graphische Darstellung einer einzelnen Sprachnachricht auf einer Benutzerschnittstelle eines Mobilgeräts 300. Zu erkennen ist, dass in einem ersten Feld 310 eine Information über die Aufnahmedauer der Sprachnachricht enthalten ist, in einem darunter liegenden Feld 320 der Absender der Sprachnachricht erkennbar ist, in einem wiederum darunter liegenden Feld 330 eine geographische Positionsangabe zur Sprachnachricht enthalten ist, in einem wieder darunter liegenden Feld 340 ein der Sprachnachricht zugeordnetes Bild als Thumbnail abgebildet ist. Ferner besteht die Möglichkeit in einem wiederum darunter liegenden Feld eine Kategoriezuordnung der Sprachnachricht wiederzugeben. Auf diese Weise kann mit einem schnellen Blick auf die graphische Benutzerschnittstelle des Mobilgeräts vom Benutzer entschieden werden, ob er diese Sprachnachricht abhören will, um deren Information aufzunehmen.

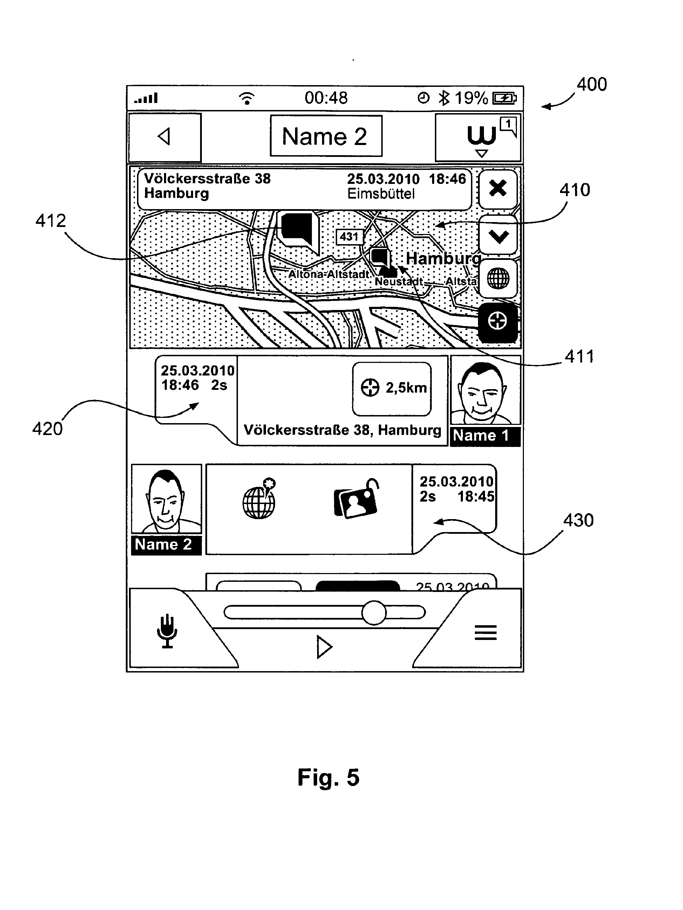

Schließlich zeigt Fig. 5 eine Nutzungssituation des erfindungsgemäßen Verfahrens für die Wiedergabe mehrerer Sprachnachrichten aus geographischen Positionsmerkmalen. In einem oberen Feld 410 einer graphischen Benutzerschnittstelle des Mobilgeräts 400 ist eine Karte abgebildet, welche einen Ausschnitt eines Stadtplans zeigt, in dem insgesamt zwei Sprachnachrichten verfügbar sind, gekennzeichnet durch die Bezugszeichen 411 - 412.

Aufgrund der Auswahl des Fensters hat der Benutzer den ihn umgebenden Bereich ausgewählt und hierdurch bestimmt, dass alle in diesem Bereich verfügbaren Sprachnachrichten wiedergegeben werden. Der Benutzer selbst befindet sich mit seinem Mobilgerät hierbei in der Mitte des graphisch wiedergegebenen Kartenbereichs. Die Wiedergabe beginnt mit der ihm nächstliegenden Sprachnachricht 412, die gegenüber der anderen Sprachnachricht 411 deshalb vergrößert dargestellt ist. Der Benutzer sieht weiterhin in einem darunter liegenden Feld 420 die inhaltsbezogenen charakterisierenden Merkmale zu der soeben wiedergegebenen Sprachnachricht 412 und in einem wiederum darunter liegenden Feld 430 die darauf folgende, nächstliegende Sprachnachricht, welche nach Ablauf der vorhergehenden Sprachnachricht 412 abgespielt wird.

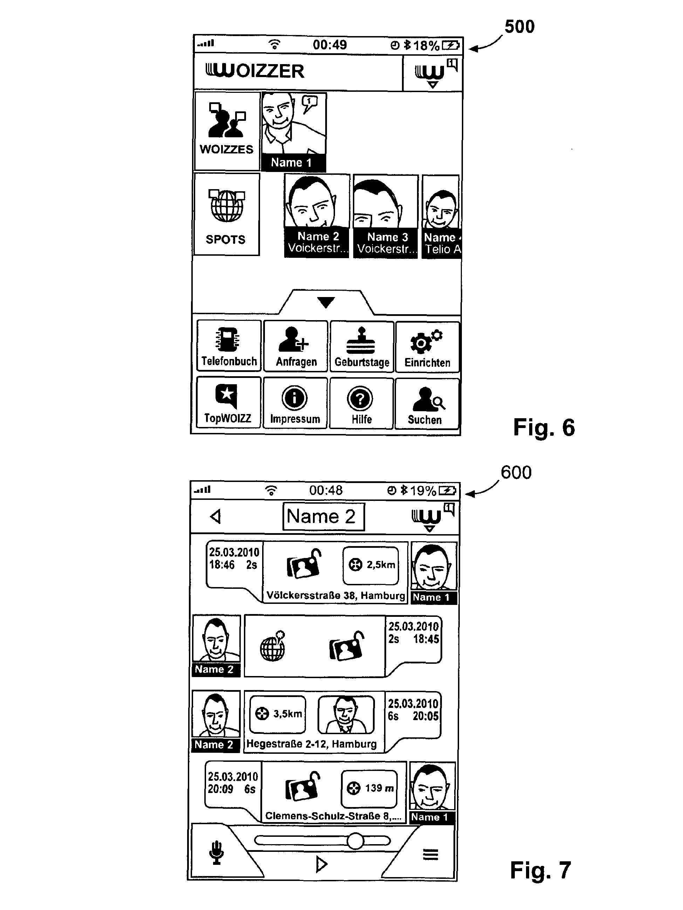

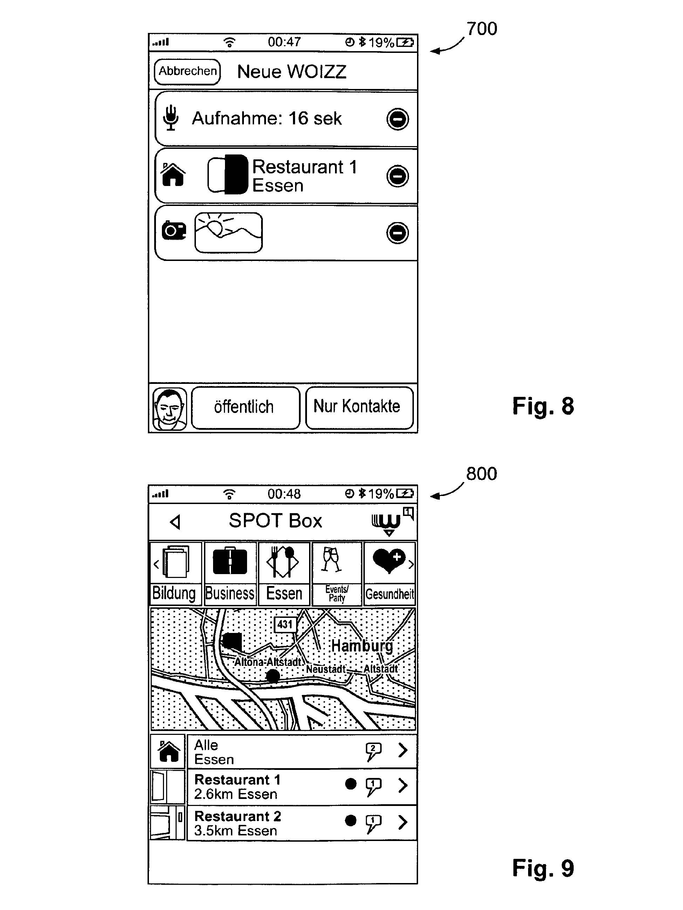

Weitere Visualisierungen einer Benutzerschnittstelle für das erfindungsgemäße Verfahren sind in den Figuren 6 bis 9 dargestellt. Dabei zeigt Figur 6 die Darstellung neuer Point-of-Interest-bezogenen Sprachnachrichten, Figur 7 eine Übersicht über den Mitteilungsverlauf zwischen den Benutzern "Name 1" und "Name 2". Figur 8 zeigt die Möglichkeit, Point-of-Interest-bezogene Sprachnachrichten vollständig öffentlich oder nur den eigenen Kontakten zugängig zu machen. Schließlich zeigt Figur 9 eine kategoriebezogene Kartendarstellung.

## Patentansprüche

1. Verfahren zum Empfangen, Verwalten und Versenden einer Mehrzahl von kontaktbezogenen Sprachdateien (11a, 12a, 13a) einer Mehrzahl von Kontakten eines Nutzers auf einem Servercomputer (50, 150) mit den Verfahrensschritten:
(i) Empfangen eines kontaktbezogenen Sprachdateipakets (11, 12, 13) auf dem Servercomputer (50, 150) von einem ersten Nutzermobilgerät (10), das zur Aufnahme von Sprache und zur Codierung der Sprache in eine Sprachdatei ausgebildet ist, wobei das Sprachdateipaket (11, 12, 13) codierte akustische Sprachsignale enthält;
(ii) Speichern des kontaktbezogenen Sprachdateipakets (11, 12, 13) auf dem Servercomputer (50, 150);
(iii) Empfangen eines Anforderungssignals, welches ein anforderndes charakterisierendes Merkmal enthält, auf dem Servercomputer (50, 150) von einem zweiten Nutzermobilgerät (30, 40),
(iv) nach Erhalt des Anforderungssignals Versenden des kontaktbezogenen Sprachdateipakets (11, 12, 13) von dem Servercomputer (50, 150) an das zweite Nutzermobilgerät (30, 40) zur Speicherung in einem Speicher des zweiten Nutzermobilgeräts (30, 40);
wobei das Sprachdateipaket (11, 12, 13) zumindest eine Sprachdatei und ein den Inhalt der Sprachdatei beschreibenden charakterisierenden Datencode umfasst;
**gekennzeichnet durch**
(v) den Verfahrensschritt des Ermittelns eines Kommunikationsverhaltens zwischen dem Nutzer und dem Kontakt des Nutzers mittels Zuordnen eines Kontaktgewichtes zu dem Kontakt des Nutzers, wobei das Kontaktgewicht einem Grad eines Kommunikationsverhaltens zwischen dem Nutzer und dem Kontakt entspricht;
wobei der Grad eines Kommunikationsverhaltens einem berechenbaren Rangwert entspricht;
wobei der Servercomputer (50, 150) das inhaltsbeschreibende charakterisierende Merkmal (211, 212, 213) auswertet und mit dem anfordernden charakterisierenden Merkmal vergleicht, und
wobei das kontaktbezogene Sprachdateipaket (11, 12, 13) an das zweite Nutzermobilgerät (30, 40) in Abhängigkeit des Ergebnisses der Auswertung, des Vergleichs des inhaltsbeschreibenden mit dem anfordernden charakterisierenden Merkmal und des Kontaktgewichtes versendet wird.

2. Verfahren zum Aufnehmen, Verwalten und Ausgeben einer Mehrzahl von Sprachdateien (11a, 12a, 13a) auf einem Nutzermobilgerät (10, 20, 30, 40), mit den Verfahrensschritten:
a) Ermitteln eines Kommunikationsverhaltens zwischen einem Nutzer und einer Mehrzahl von Kontakten des Nutzers mittels
Zuordnen eines Kontaktgewichtes zu zumindest einem der Mehrzahl von Kontakten des Nutzers, wobei das Kontaktgewicht einem Grad eines Kommunikationsverhaltens zwischen dem Nutzer und dem Kontakt entspricht, wobei der Grad eines Kommunikationsverhaltens einem berechenbaren Rangwert entspricht;
b) Erstellen von individuellen Sprachdateipaketen (11, 12, 13) mittels:
Aufnehmen einer individuellen Sprachdatei mittels einer Aufnahmeschnittstelle auf einem ersten Nutzermobilgerät (10) durch einen Kontakt des Nutzers;
Zuordnen eines inhaltsbezogenen charakterisierenden Merkmals (211, 212, 213) zu der Sprachdatei,
Erstellen eines individuellen Sprachdateipakets (11, 12, 13) aus der individuellen Sprachdatei, dem inhaltsbezogenen charakterisierenden Merkmal (211, 212, 213) und einer Kennung des Kontakts auf dem ersten Nutzermobilgerät (10), und
Versenden des individuellen Sprachdateipakets (11, 12, 13) von dem ersten Nutzermobilgerät (10) an einen Servercomputer (50, 150); und
c) Ausgeben von Sprachdateipaketen (11, 12, 13) mittels:
Senden eines anfordernden charakterisierenden Merkmals von einem zweiten Nutzermobilgerät (30, 40) an den Servercomputer (50, 150);
Empfangen einer Mehrzahl von Sprachdateipaketen (11, 12, 13) auf dem zweiten Nutzermobilgerät (30, 40) von dem Servercomputer (50, 150), wobei jedes Sprachdateipaket (11, 12, 13) eine Sprachdatei und ein dem anfordernden charakterisierenden Merkmal zugeordnetes inhaltsbeschreibendes charakterisierendes Merkmal (211, 212, 213) enthält;
Speichern der Mehrzahl von Sprachdateipaketen (11, 12, 13) in einem Speicher des zweiten Nutzermobilgeräts (30, 40);
Einspeisen eines ausgabebezogenen charakterisierenden Merkmals in das zweite Nutzermobilgerät (30, 40);
Auswerten des inhaltsbezogenen charakterisierenden Merkmals (211, 212, 213) auf dem zweiten Nutzermobilgerät (30, 40) und
Erstellen einer Reihenfolge der Mehrzahl von Sprachdateipaketen (11, 12, 13) anhand eines Vergleichs des inhaltsbezogenen charakterisierenden Merkmals (211, 212, 213) mit dem ausgabebezogenen charakterisierenden Merkmal auf dem zweiten Nutzermobilgerät (30, 40), wobei das Erstellen einer Reihenfolge in Abhängigkeit des Kontaktgewichtes erfolgt;
zeitlich aufeinanderfolgendes Wiedergeben der Sprachdateien (11 a, 12a, 13a) der Mehrzahl von Sprachdateipaketen (11, 12, 13) in der erstellten Reihenfolge über eine akustische Ausgabevorrichtung des zweiten Nutzermobilgeräts (30, 40).

3. Verfahren nach einem der vorstehenden Ansprüche,
wobei der Rangwert berechnet wird, indem aus folgenden Faktoren:
- einer Häufigkeit eines Sendens und/oder Empfangens von Sprachdateipaketen (11, 12, 13) zwischen dem Nutzer und dem Kontakt, wobei die Häufigkeit einem absoluten Zahlenwert oder einem Zahlenwert pro Zeiteinheit entspricht,
- einem dem Kontakt zugeordneten persönlichen Rangfaktor, welcher durch den Nutzer individuell bestimmt werden kann,
- einem einer Kategorie des Kontaktes zugeordneten Rangfaktor, wobei die Kategorie insbesondere eine von Verwandte, Freunde, Kollegen und Kontakte mit gleichen Interessen ist,
zumindest einer, vorzugsweise zwei oder alle drei in einer vorbestimmten Gewichtung in eine Berechnung einfließen.

4. Verfahren nach einem der vorstehenden Ansprüche,
wobei als anforderndes und/oder als ausgabebezogenes charakterisierendes Merkmal eine geographische Positionsangabe über eine Benutzerschnittstelle des zweiten Nutzermobilgeräts (30, 40) eingegeben wird oder mittels einer geographischen Positionsbestimmungsvorrichtung des zweiten Nutzermobilgeräts (30, 40) ermittelt wird,
das inhaltsbezogene charakterisierende Merkmal (211, 212, 213) von Sprachdateipaketen (11, 12, 13), die auf dem Servercomputer (50, 150) gespeichert bzw. von diesem empfangen werden, eine geographische Positionsangabe darstellt;
die Sprachdateipakete (11, 12, 13) an das zweite Nutzermobilgerät (30, 40) übertragen bzw. auf dem zweite Nutzermobilgerät (30, 40) akustisch wiedergegeben werden, wenn eine vordefinierte Distanz zwischen der geographischen Positionsangabe des anfordernden bzw. ausgabebezogenen charakterisierenden Merkmals und der geographischen Positionsangabe des inhaltsbezogenen charakterisierenden Merkmals (211, 212, 213) des jeweiligen Sprachdateipakets (11, 12, 13) unterschritten wird.

5. Verfahren nach Anspruch 4, ferner mit dem Verfahrensschritt:
Auswählen einer Route zwischen geographischen Positionsangaben von zumindest einer Teilmenge der Sprachdateipakete (11, 12, 13), wobei das Auswählen insbesondere der Route zugeordnete Streckengewichte und/oder die der Teilmenge der Sprachdateipakete (11, 12, 13) zugeordneten Kontaktgewichte berücksichtigt;
wobei die Streckengewichte für geordnete Paare von geographischen Positionsangaben ermittelt werden;
wobei ein Streckengewicht einem Rangwert entspricht, der berechnet wird, indem vorgespeicherte Berechnungswerten in einer vorbestimmten Gewichtung in eine Berechnung einfließen;
wobei die vorgespeicherten Berechnungswerte spezifisch für eine bestimmte Reiseart sind und insbesondere umfassen:
- eine Streckenlänge zwischen dem geordneten Paar von geographischen Positionsangaben;
- eine Reisedauer zwischen dem geordneten Paar von geographischen Positionsangaben;
- Reisekosten, um die Strecke zwischen dem geordneten Paar von geographischen Positionsangaben zurückzulegen.

6. Verfahren nach Anspruch 5,
wobei
ein Umgebungsbereich des Nutzers über eine graphische Wiedergabeeinheit des zweiten Nutzermobilgeräts (30, 40) ausgegeben wird;
die Größe des ausgegebenen Umgebungsbereichs über eine Benutzerschnittstelle skalierbar ist; und
alle Sprachdateipakete (11, 12, 13) an das zweite Nutzermobilgerät (30, 40) übertragen bzw. auf dem zweiten Nutzermobilgerät (30, 40) akustisch wiedergegeben werden, deren geographische Positionsangabe des inhaltsbezogenen charakterisierenden Merkmals des jeweiligen Sprachdateipakets (11, 12, 13) innerhalb des solcherart skaliert ausgegebenen Umgebungsbereichs liegt,
wobei vorzugsweise die Sprachdateipakete (11, 12, 13) gemäß der ausgewählten Route in eine Reihenfolge sortiert werden, und in dieser Reihenfolge übertragen bzw. wiedergegeben werden.

7. Verfahren nach einem der Ansprüche 5 oder 6,
wobei die ausgewählte Route an das zweite Nutzermobilgerät (30, 40) gesendet bzw. von diesem empfangen und gespeichert wird, wobei die ausgewählte Route eine erste Route ist;
die Wiedergabe der ersten Route auf dem zweiten Nutzermobilgerät (30, 40) begonnen wird;
während dieser Wiedergabe eine weitere ausgewählte Route auf das zweite Nutzermobilgerät (30, 40) gesendet bzw. von diesem empfangen und gespeichert wird, wobei die weitere ausgewählte Route eine zweite Route ist; und
die Versendung bzw. der Empfang und die Speicherung der ersten Route abgebrochen wird und bereits gespeicherte Anteile der ersten Route gelöscht werden, falls die Wiedergabe der ersten Route durch eine Benutzereingabe in eine Benutzerschnittstelle vor dem Ende der ersten Route unterbrochen wird.

8. Verfahren nach einem der vorstehenden Ansprüche,
wobei einem Sprachdateipaket (11, 12, 13) weiterhin ein Rangwert zugeordnet wird, der berechnet wird, indem aus folgenden Faktoren:
- der seit dem Erstellungszeitpunkt der Sprachnachricht vergangenen Zeitspanne,
- der Anzahl der Speichervorgänge, mit denen das Sprachdateipaket (11, 12, 13) auf weiteren Nutzermobilgeräten (30, 40) nach Abrufen des Sprachdateipakets (11, 12, 13) gespeichert wurde,
- der Anzahl der Weiterleitungsvorgänge, mit denen das Sprachdateipaket (11, 12, 13) durch ein Nutzermobilgerät (10) an ein anderes Nutzermobilgerät (30, 40) gesendet wurde,
- ein dem Absender des Sprachdateipakets (11, 12, 13) zugeordneter persönlicher Rangfaktor, welcher sich aus der Höhe der Rangwerte der bisher von diesem Absender erstellten Sprachdateipakete (11, 12, 13) errechnet,
zumindest zwei, vorzugsweise drei oder alle vier in einer vorbestimmten Gewichtung in eine Berechnung einfließen, und
eine Reihenfolge oder Auswahl von Sprachnachrichten, die an ein Nutzermobilgerät (30, 40) versendet oder von diesem Nutzermobilgerät (30, 40) abgespielt werden, anhand des solcherart berechneten Rangwertes erfolgt.

9. Verfahren nach Anspruch 8,
wobei aus einer Mehrzahl von Sprachdateipaketen (11, 12, 13), deren inhaltsbezogene(s) Merkmal(e) (211, 212, 213) mit dem/den anfordernden bzw. ausgabebezogenen Merkmal(en) übereinstimmen, eine vorbestimmte, insbesondere über eine Eingabe in das Nutzermobilgerät (10, 20, 30, 40) vorbestimmbare Anzahl von Sprachdateipaketen (11, 12, 13) versendet bzw. ausgegeben werden und diese Anzahl von Sprachdateipaketen (11, 12, 13) zwei Anteilen umfasst,
wobei der erste Anteil aus Sprachdateipaketen (11, 12, 13) besteht, deren Erstellungsdatum nicht mehr als eine vorbestimmte Zeitspanne, insbesondere über eine Eingabe in das Nutzermobilgerät (10, 20, 30, 40) vorbestimmbare Zeitspanne vor dem Zeitpunkt der Anforderung bzw. Wiedergabe liegt und der zweite Anteil aus Sprachdateipaketen (11, 12, 13) besteht, die die höchsten Rangwerte haben.

10. Verfahren nach einem der vorstehenden Ansprüche,
wobei mehrere Sprachdateipakete (11, 12, 13) zu einer Programmzeit als Datenblock über eine bestehende drahtlose Funkverbindungen an das Nutzermobilgerät (10, 20, 30, 40) gesendet bzw. von diesem empfangen werden, auf diesem gespeichert werden und zu einem späteren Zeitpunkt bei nicht bestehender drahtloser Funkverbindung auf dem Nutzermobilgerät (10, 20, 30, 40) ausgegeben werden.

11. Verfahren nach einem der vorstehenden Ansprüche, wobei ein Sprachdateipaket (11, 12, 13) eine Benutzereingabe abfragt oder eine Datenverbindung zu einem Computer herstellt, der eine Benutzereingabe abfragt und dabei vorzugsweise vor Eingabe der Benutzereingabe in das Nutzermobilgerät (10, 20, 30, 40) oder vor deren Versendung das Nutzermobilgerät (10, 20, 30, 40) mit dem Servercomputer (50, 150) oder einem anderen Computer Daten austauscht, die einen Zahlungsvorgang bewirken.

12. Verfahren nach einem der vorstehenden Ansprüche,
wobei in Antwort auf eine Eingabe des Nutzers eine Kommunikationsverbindung hergestellt wird zu einem Kontakt, dessen Sprachdateipaket (11, 12, 13) an eine vorbestimmte Position der erstellten Reihenfolge sortiert wurde,
und/oder dessen Sprachdateipaket (11, 12, 13) zuletzt übertragen bzw. akustisch wiedergegeben wurde.

13. Servercomputer (50, 150), welcher ausgestaltet ist, die Verfahrensschritte (i) bis (v) nach einem der Ansprüche 1, 3-12 auszuführen.

14. Nutzermobilgerät (10, 20, 30, 40), welches ausgestaltet ist, die Verfahrensschritte (b) oder (c) nach einem der Ansprüche 2-12 durchzuführen, wobei das Nutzermobilgerät (10, 20, 30, 40) vorzugsweise folgendes umfasst:
- eine Dateneingabeschnittstelle zum Empfang akustischer Eingaben,
- eine Datenausgabeschnittstelle zur Ausgabe akustischer Sprachdaten,
- eine Positionsbestimmungsvorrichtung zur Bestimmung der geographischen Position des Nutzermobilgeräts (10, 20, 30, 40),
- eine Dateneingabeschnittstelle zur Eingabe von Textdaten und/oder
- eine Datenausgabeschnittstelle zur Ausgabe graphischer Daten.
